# EUROPEAN PATENT APPLICATION

(11) **EP 4 095 718 A1**
(43) Date of publication of application: **30.11.2022**
(21) Application number: 22170316.8
(22) Date of filing: 27.04.2022
(51) Int. Cl.: G06F 16/93, G06V 30/412

(54) **METHOD AND SYSTEM FOR HANDLING INPUT DATA**

(30) Priority: 28.05.2021 SE 2150684
(71) Applicant: Medius Sverige AB, 252 20 Helsingborg (SE)
(72) Inventor: Andersson, Katarina, Täby (SE); Ahlkvist, Lars, Helsingborg (SE); Gondek, Aleksander, Tullinge (SE); Bdeir, Esam, Helsingborg (SE); Szabo, Robert, Munka-Ljungby (SE); Andersson, Marcus, Helsingborg (SE); Krawczynski, Krysztof, Kraków (PL); Hansson, Tomas, Helsingborg (SE)
(74) Representative: Hansson Thyresson AB

(57) **Abstract**

The present invention relates to a method 300, an interface 40, and computer code for adapting a data structure of an input data set for processing in a computer system 14. The method comprises receiving, in a data processing device 20, the input data set including plurality of data posts, identifying identifiers in the input data set, each identifier being connected to at least one data post received in the input data set and indicating the sort of data represented by the connected data post, displaying a first subset of the data posts 46 from the input data set in a display view 42, wherein each data post 46 is displayed at a specified position within a display area related to the identifier of the data post 46, mapping, in the data processing device 20, the received data set identifiers relating to each of a second subset of the data posts to identifiers of data posts in a capture data set, displaying the second subset of the data posts in a dynamic rearrangement view 44, wherein each data post 50 of the second subset is displayed in a field 50 connected to the identifier related to the data post 50 displayed, receiving a first identifier connected to a data post 46 selected in the display view, receiving a second identifier connected to a data post 50 selected in the rearrangement view, remapping, in the data processing device 20, the data post connected to the first identifier to the data post in the capture data set connected to the second identifier, and sending the remapped capture data set to the computer system 14 for processing based on the connected identifiers.

## Description

### TECHNICAL FIELD

The present invention relates to method and system for adapting or transforming a data structure of an input data set for processing in a computer system.

### BACKGROUND

The distribution of information and data have a history of being managed by paper, e.g., paper forms for collecting information, specifications of equipment or business agreements, financial documents, technical documents, orders, invoices, alternative settings for equipment. Today some data that are to be processed or to control processing of data by computer systems are still delivered in paper form. To facilitate exchange of the information electronic exchange format are used. Examples of such exchange formats are various electronic data interchange based formats (EDI formats), e.g. EDIFACT, ANSI X12 810, etc., XML based formats, e.g. PEPPOL BIS 3.0, EHF, Svefaktura, Fattura PA, Finvoice, ZUGFeRD, etc., formats based on flat text files, e.g., comma separated posts, character position related, tab separated, etc., or table formats, e.g., excel files or any other spreadsheet files or a table in a database. In many cases even if a standardized electronic exchange formats is specified there may be differing implementations of the exact nature of the data in some posts of a data delivery. A computer system for processing the data received may have to comply with all the data formats and as if the amount of data formats is not enough the generation of the data may have experienced human errors when generated or the idea of what data to provide in a data post may vary depending on preferences or practical issues. The variations between the formats and the practical implementation and use of the formats makes it technically difficult and costly to process such data due to, e.g., complexity of the formats and possible non-stringency in the use of the formats. For example, it may even be difficult for a person well familiar handling the specific information and data delivered to find relevant data points in an XML file including several hundreds of lines. It is often necessary to involve an expert on the particular format to resolve compatibility issues between the received data and the requirements of the receiving system. Involvement of such an expert to resolve issues often results in delays and added costs.

From the above it is understood that there is room for improvements and the invention aims to solve or at least mitigate the above and other problems.

### SUMMARY

One object of the present invention is to provide an alternative method of adapting formatted data to structures readily accepted by a device intended to process the received structured data.

The invention is defined by the appended independent claims. Additional features and advantages of the concepts disclosed herein are set forth in the description which follows, and in part will be obvious from the description, or may be learned by practice of the described technologies. The features and advantages of the concepts may be realized and obtained by means of the instruments and combinations particularly pointed out in the appended claims. These and other features of the described technologies will become more fully apparent from the following description and appended claims, or may be learned by the practice of the disclosed concepts as set forth herein.

In a first aspect a method for adapting a data structure of an input data set for processing in a computer system comprises receiving, in a data processing device, the input data set including plurality of data posts, identifying identifiers in the input data set, each identifier being connected to at least one data post received in the input data set and indicating the sort of data represented by the connected data post, displaying a first subset of the data posts from the input data set in a display view, wherein each data post is displayed at a specified position within a display area related to the identifier of the data post, mapping, in the data processing device, the received data set identifiers relating to each of a second subset of the data posts to identifiers of data posts in a capture data set, displaying the second subset of the data posts in a dynamic rearrangement view, wherein each data post of the second subset is displayed in a field connected to the identifier related to the data post displayed, receiving a first identifier connected to a data post selected in the display view, receiving a second identifier connected to a data post selected in the rearrangement view, remapping, in the data processing device, the data post connected to the first identifier to the data post in the capture data set connected to the second identifier, and sending the remapped capture data set to the computer system for processing based on the connected identifiers. One advantage of this aspect is that the checking of and adapting received data that may have great impact in a receiving computer system is facilitated. Moreover, the process of adapting the received data to the requirements of the system that are to perform various tasks based on this data is facilitated to such a degree that an expert in the specific format is no longer required to do adjustments, but it may be performed by a user or an operator using the system that are to perform the tasks.

In some embodiments the mapping of identifiers of the received data set to identifiers of the capture data set is specified in a mapping rule. One advantage of this feature is that it becomes possible that a correction of a structural error in the received format or at the sight of the sender of the data only has to be corrected once as the correction may be provided in the mapping rule. This embodiment may further include identifying the sender of the received data set from a data post connected to an identifier identifying a post as including data of the sender and retrieving a mapping rule configured for the identified sender. The advantage of connecting mapping rules to the sender may for instance be that the reception of data from various senders are facilitated with the possibility to experience the same advantages for all the various senders even if they are generating data in systems creating different structured data messages. Further the remapping of the received first identifier to the received second identifier may be registered in the mapping rule. In this way the system may learn based on the adaptions made previously.

Moreover, in some embodiments the displaying of the second subset of the data posts from the capture data set is dynamically updated in response to the remapping of identifiers. The advantage of such update is that the user will be able to have a last check on the data to process before having it executed by the receiving system.

According to further embodiments the method may include sending an image corresponding to the display view in connection with the sending of the corresponding capture data set.

Further, the computer system receiving the capture data set may parse the identifiers of the capture data set and trigger functions identified by the identifier using the corresponding data post as value for the identified function.

In some embodiments the display view is arranged to resemble a physical document that traditionally is carrying the corresponding information of at least a subset of the input data set. One advantage of such a feature is that a user more quickly will be up and running with the task of adapting received data sets to the process of the system to execute upon the data instead of having to contact the sender of the data and convince them to change their data. Moreover, the arrangement may also decrease the amount of troubles arising from the data posts being wrong or not up to the requirements of the receiving system.

In yet further embodiments identifying identifiers in the input data set includes reading in the input data set included identifiers which each are connected to a data post in the input data set.

According to some embodiments the interface, presenting the display view and the rearrangement view, and the data processing device are hosted on the same computer.

According to another aspect of the invention a data adapting interface configured to perform the above described methods. The advantages described in relation to features of the method applies to the corresponding feature of the interface.

According to yet another aspect of the invention a non-transitory computer-readable medium storing processor-executable instructions that, when executed by a processor, cause the processor to perform the above described method. The advantages described in relation to features of the method applies to the corresponding feature of the non-transitory computer-readable medium.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description. Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a sensor" or "the sensor" may include several sensors, and the like. Furthermore, the word "comprising" does not exclude other elements or steps.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
- Fig. 1: is a schematic view of devices implementing the invention according to some embodiments and the environment of such embodiments,
- Fig. 2: is a schematic view of an interface according to embodiments of the invention,
- Fig. 3a: is a flowchart over part of a process according to embodiments of the invention, and
- Fig. 3b: is a flowchart over the other part of the process from Fig. 3a according to embodiments of the invention.

Further, in the figures like reference characters designate like or corresponding parts throughout the several figures.

### DETAILED DESCRIPTION

Hereinafter, certain embodiments will be described more fully with reference to the accompanying drawings. It will be apparent to those skilled in the art that various modifications and variations can be made without departing from the inventive concept. Other embodiments will be apparent to those skilled in the art from consideration of the specification and practice disclosed herein. The embodiments herein are provided by way of example so that this disclosure will be thorough and complete and will fully convey the scope of the inventive concept, and that the claims be construed as encompassing all equivalents of the present inventive concept which are apparent to those skilled in the art to which the inventive concept pertains. If nothing else is stated, different embodiments may be combined with each other.

In some embodiments a system and a method for adapting received tagged control data from a third-party to a format and/or a structure that enables and/or facilitates a controlled process and/or system to operate in accordance with the control data from the third party. The control data may be received as structured data posts each including a value indicating a setting or an adjustment of a setting in computer system. Each control data post of the received tagged control data is related to a tag and the control data post being related to a function or a category indicated by the tag of the control data post. The adaption of the control data has the advantage of making it possible to operate the process and/or system using a variety of third-party control data generators and it also makes it possible to operate the process and/or system using received control data that is not tagged in accordance with the requirements of the process and/or computer system.

For the checking and/or adaption of the received tagged control data to the process to be controlled the received tagged control data may be displayed on a display in a display area of a display view by means of a layout template configured to display strings of characters representing the control data at positions in the display area provided in the layout template and connected to tags. The layout template is further configured to display the control data at positions corresponding to positions in a physical data sheet for sending of control data, e.g. the layout of a paper version, which have a layout and a format familiar to a user. In the display area control data may be displayed together with a short text representing the tag for that particular control data post, without such a short text, or some of the displayed control data posts are displayed together with the short text while others are not.

The display also displays a dynamic rearrangement view which includes fields for displaying control data to be output from the adaption or checking process for use in controlling the process to be controlled. Each field may be provided with a short explanatory text representing the control data represented by the field. Each field is connected to a data post in a capture data set. The capture data set being a data set including the control data that is output to the computer system for processing and controlling. The fields in the dynamic rearrangement view and consequently corresponding data posts in the capture data set is populated by data posts from the received control data posts in accordance with a mapping rule. This mapping using the mapping rule may be adequate in some cases, however, in other instances the application of the mapping rule results in a corrupt or at least a problematic capture data set. To overcome such obstacles, according to some embodiments of the invention, the display view and the dynamic rearrangement view may be displayed simultaneously on the display and enabling remapping of data posts in the display view to fields in the dynamic rearrangement view by selecting a data post in the display view and selecting a field in the dynamic rearrangement view. In response to the selection of a data post in the display view and the selection of a data field in the dynamic rearrangement view the displayed data post is remapped to the data field and the selected data post, which corresponds to a data post in the received control data, is forwarded to the data post in the capture data set corresponding to the data field in the dynamic rearrangement view. In the above-described correction or adaption scheme applied to received control data, the transformation of the control data from one format and/or structure to another is facilitated and the quality of such transformation is ensured by the user. Further, implementing and using the adaption method increases the chances of the control data outputted being correctly executed and processed at the target computer system. In order to further decrease the risk of a control data transfer failing to deliver control data to the correct operation, function, or category, the mapping rule may be updated in response to a remapping of a connection between data posts of the received control data and the capture data set.

According to some embodiments, the user acknowledges the capture data set and the capture data set is passed on for processing when the user is satisfied with the data posts in the capture data set.

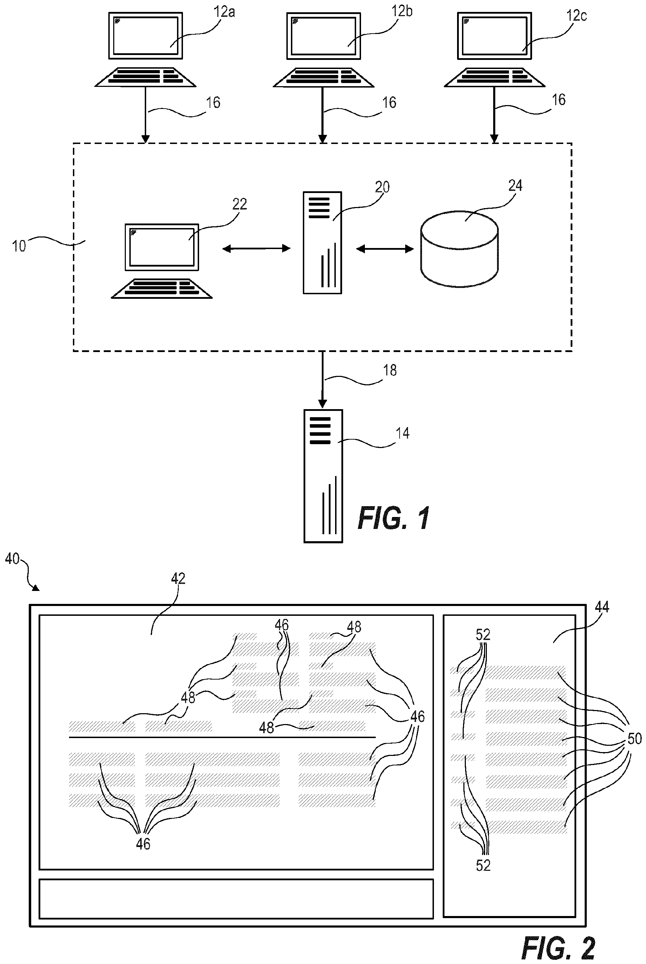

Now referring to Fig. 1, a possible environment including a data adapting system 10 according to embodiments of the invention includes the data adapting system 10, data generators 12a-c, and a computer system 14 intended to process data and/or operate in response to data generated by data generators 12a-c. Each of the data generators 12a-c is configured to capture or register data posts for the computer system 14 and to form a data message including captured data posts and an identifier connected to each data post. A data generator 12a-c may be a computer, a computer system, a PC, a workstation, a tablet, a mobile phone, or any other electronic device enable to receive data posts via human input or machine input. The identifier may be configured to identify the type or sort of data represented by the data post, e.g. the type or sort of data may include a category, an operation, and/or a function that the data is related to. The data message may, for instance, be formed using a data structure in which each data post is tagged using an identifier, for example may Extensible Markup Language (XML) be used. In some instances, a standardized mark-up structure may be used for the data message, e.g. PEPPOL BIS 3.0, EHF, Svefaktura, Fattura PA, Finvoice, ZUGFeRD, etc. Other examples of data exchange message formats are various electronic data interchange based formats (EDI formats), e.g. EDIFACT, ANSI X12 810, etc., formats based on flat text files, e.g. comma separated posts, character position related, tab separated, etc., or table formats, e.g. excel files, any other spreadsheet files, or a table in a database. The identifier of a post may be resolved by reading a tag or a mark-up text connected to the data post, by identifying the field of or position of the data post in the data message and translating this field or position into a predetermined identifier for the field or position. The predetermined identifier may be provided in the same data message as the data post or may be provided in a separate data string or message. A tag may be an identifier configured to enable identification of the sort of data according to a coded system or in plain text.

The data message is sent from the data generator 12a-c to the data adapting system 10 via a network connection 16. A data message including data posts that have been adapted and/or transformed in accordance with the requirements of computer system 14 is sent from the data adapting system 10 to the computer system 14 via another network connection 18. The network connections 16, 18, may be connections using the Internet, a WAN, a LAN, or any other network type, and may use technologies such as ethernet, Wi-Fi, cellular network communication, public switched telephone network, Bluetooth, NFC, etc. In some embodiments the computer system 14, which is arranged to perform processing based on the data from the data generator 12a-c, is arranged in the same system as the data adapting system 10 and hence the communication between the data adapting system 10 and the computer system 14 may be internal communication of a computer system, e.g. via a data bus, a memory, register positions in a memory, etc.

Depending on the processes implemented in the computer system 14 the computer system may be configured to act on received data by adjusting, setting, and/or controlling physical properties of some related system, e.g. adjusting levels, positions, angles, power, etc. The computer system 14 may also be configured to control generation of further instructions to yet other processing systems, to accumulate received data for later analysis or generation of accumulated instructions for other processing systems, to populate databases, etc.

In some embodiments the data adapting system 10 includes a data adaption processing device 20, also referred to as a data processing device, a user interaction system 22, and a data storage device 24. The data adaption processing device 20 may be a server, a computer, a workstation, or any other suitable data processing device. The data adaption processing device may also be a computer code module or program executing in any of the above devices. The data adaption processing system 20 and the user interaction system 22 may be separate or integrated. The user interaction system 22 may include a display unit for output of data and to present a user interface and at least one computer control device for making inputs to the interface, e.g., a keyboard, any type of pointing device, a touch screen etc. A pointing device may for instance be a computer mouse, a stylus, a track ball, an active pen tablet, etc.

Now referring to Fig. 2, the user interface 40 according to some embodiments of the invention includes two main display areas, a display view 42 and a dynamic rearrangement view 44. The display view 42 is configured to display at least a first subset of the data posts 46 received in a data message from any one of the data generators 12a-c. The displayed data posts 16 may be arranged in the display view area 42 in a manner facilitating recognition of the posts and their identities. For some data posts 46 a short text 48 indicating the sort of data that the identifier connected to the data post 46 is representing is displayed in the vicinity of the position of the data post 46. For some data posts 46 a short text indicating the sort of data that the identifier connected to the data post 46 is representing is positioned to represent a plurality of data posts, e.g. as a header in a table. Some data posts are not displayed together with any short text at all, instead the position within the display view 42 indicates the type of data represented. In some embodiments the structure of the arrangement of the data posts 46 reflects a structure found in traditional paper versions of information delivery. The arrangement of the data posts 46 in the display view 42 may provide a layout, fonts, colours, and placement of data posts that imitates a physical document.

The layout of the display view may be predefined in a layout template configured to position strings of characters representing the data posts 46 at defined positions in the display area based on the identifiers 48 or tags related to each displayed data post 46. In some implementations this layout template is coded using, e.g., JavaScript. In such implementations the program code is configured to extract the information relating to tags relevant for the specific layout and render the data post 46 and, when relevant, the short text 48 at positions defined in the code.

The dynamic rearrangement view 44 is configured to display adapted data posts 50 and a text representing the identifier 52 of the data post 50. The specific identifiers 52 and the specific fields populated with data posts 50 that are presented in the dynamic rearrangement view 44 may be predetermined. The layout and the specific fields for data posts 50 specified for the dynamic rearrangement view 44 may be adapted for a specific output, i.e. the data post identities 52 required by the receiving computer system 14 may be predetermined and displayed in the dynamic rearrangement view.

Further, the data posts 46 and/or the short text 48 in the display view 42 may be selectable and the data fields 50 and/or the identifiers 52 in the dynamic rearrangement view 44 may be selectable. The interface including the display view 42 and the dynamic rearrangement view may also be configured so that a selection in the display view 42 is connected to a selection in the dynamic rearrangement view 44, or vice versa. Such selection and connection may be implemented by detecting a selection of a data post 46 in the display view 42 and a subsequent selection of a data post 50 in the dynamic rearrangement view 44, by a drag and drop scheme, or by any other known selection and connecting scheme for interfaces. The selection and connection may alternatively be implemented by detecting a selection of a data field or data post 50 in the dynamic rearrangement view 44 and a subsequent selection of a data post 46 in the display view 42 by a drag and drop scheme, or by any other known selection and connecting scheme for interfaces. The selection of a post or a field may also be achieved by tabbing a highlighting or an indication through the posts or fields of the display view 42 and/or the dynamic rearrangement view 44.

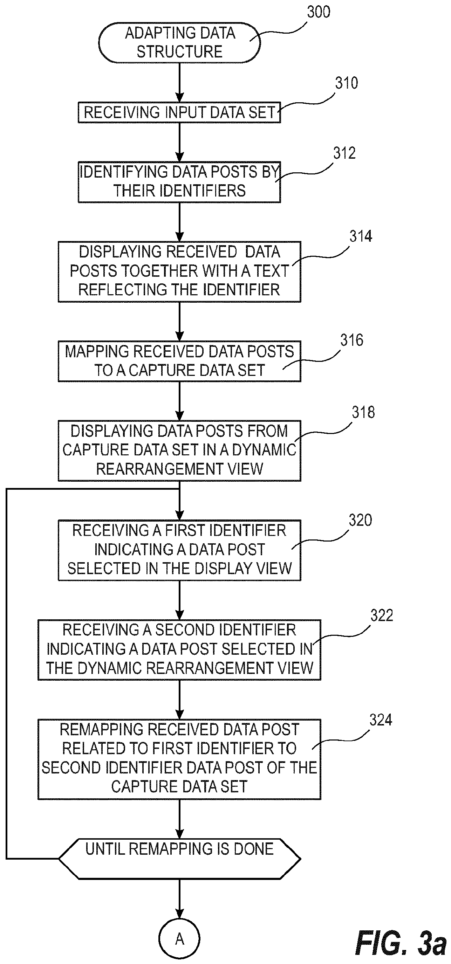

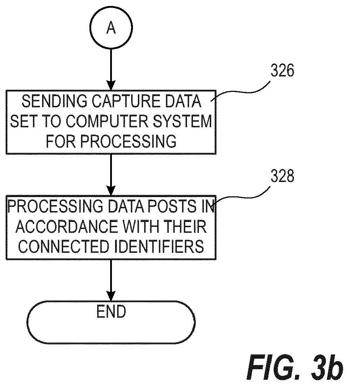

Now referring to Fig. 3, a process 300 for adapting a data structure of an input data set starts with the receipt of the input data set, Step 310. The input data set is received in a data message sent from one of the data generators 12a-c and includes structured data posts 46 and identifiers 48 as described earlier. In the input data set of the received data message the data posts are identified by the data processing device looking at identifiers or tags included in the data set and connected to data post in the data set, step 312. As mentioned previously the identifier of data posts may also be determined by identifying the position of the data post in the received data message or any other method previously discussed. Each identifier indicates the sort of data that the connected data post represents.

A first subset of the received data posts 46 is displayed in the display view 42, wherein at least some data posts 46 are displayed together with a short descriptive text representing the identifier 48 and thereby indicating the sort of data that the corresponding data post represents, step 314. Each identifier 48 of the first subset is associated with a predetermined position in the display view 42 and the connected data post 46 is displayed together with the text relating to the identifier.

The data adaption processing device 20 further maps data posts 46 of a second subset from the received data message to data posts 50 in a capture data set based on identifiers in the received data message and identifiers in the capture data set, step 316, i.e., data posts connected to a specific identifier in the received data message is mapped to a data post in the capture data set that have a corresponding identifier. The first and second subsets may include identical data posts, alternatively the first subset may be larger than the second subset or the second subset may be larger than the first subset.

When the data posts from the received data message have been mapped to the capture data set the second subset of the data posts in the capture data set is displayed, step 318, in the dynamic rearrangement view 44 together with a short descriptive text indicating the sort of data of the data post. The descriptive text being based on the identifier associated with the data post of the capture data set as previously described.

A data post 46 is then selected in the display view 42 and a first identifier related to the position in the display view of the selected data post is received in the data adaption processing device 20 in response to the selection, step 320. The selection of the data post 46 may be performed by the user clicking on the representation of the data post 46 in the display view 42 or at the vicinity of the data post 46 in the display view 42. Other ways of selecting the data post 46 may of course be used. For instance, the user may identify an area in which the data post 46 is present. This may be achieved by encircling, e.g., using a "lasso" function, an area in the display view including the data post 46. In addition, a data post 50 or a data field is selected in the dynamic rearrangement view 44 and a second identifier related to the position of the selected field or data post is received in the data processing device, step 322. This selection in the dynamic rearrangement view may be performed by the user clicking on the data post 50, the descriptive text of the data post 50, the field including the data post 50, etc. Other ways of selecting the data post 50 may be used. For instance, the user may identify an area in which the data post 50 is present. This may be achieved by encircling, e.g., using a "lasso" function, an area in the display view including the data post 50. Yet another way to select the two data posts to be remapped is by "drag and drop", i.e., the user is selecting the data post in display view 42 and then, while pressing a button, moving an indicator of the initially selected data post 46, 50 to the data post 46, 50 that the initially selected one is to be connected to. Based on the received first identifier and second identifier the data post 46 of the received data message being related to the first identifier is remapped to the data post of the capture data set being related to the second identifier, step 324. These steps of remapping may then be repeated for further data posts and when all desired remapping has been registered the capture data set is sent to the computer system 14 for processing, step 326. The sending of the capture data set to the computer system may be triggered by the user, e.g. by pushing a button or a key or selecting an ikon on the display, indicating that the user finds the data mapping satisfactory. At the computer system 14 the data posts of the capture data set are processed in accordance with the connected identifiers, step 328.

In some embodiments at least one data post of the data message includes data identifying the sender or originator of the data. Such a sender data post may be used to connect and/or relate different data messages originating from the same sender or originator. Further, in some embodiments the remapping actions performed in steps 320-324 is stored in a mapping rule connected to the sender of the data. This customised mapping rule may then be accessed the next time a data message from the same sender is received and thereby customising the mapping in step 316 and correcting or adjusting for differences or errors in the use of specific data post identifiers between a sender or a sending computer program (i.e. a data generator 12a-c) and the receiving computer system 14 or a receiving computer program running on the computer system 14. The storing of remapping actions may include steps such as to store the latest registered remapping performed. For example, if in a first remapping session a data post A of the input data set has been remapped to data post β of the capture data set and data post E of the input data set has been remapped to data post λ of the capture data set a mapping rule may look like:
A -> β
E -> λ
Then, if in a second remapping session data post A of the input data set is remapped to data post α of the capture data set and no other remapping is performed, the mapping rule may be changed to:
A -> α
E -> λ
Hence, only the remapping of A from the input data set is changed.

The mapping rule may be stored in any way known to the skilled person, i.e., it could be stored as a table, as a binary file, as a text file, as a data set, as a vector, etc. The mapping rule may be stored in memory of the data adaption processing device 20, in the data storage device 24, on a remote storage device or server (not shown in the figures), etc.

The remapping and mapping scheme may, according to some embodiments, be more complex than in the example described above. For instance, the mapping rule may include statistics of the frequency or actual number of mapping instances, i.e. every time the specific mapping has been used, for each of the data posts or each of the data posts ever remapped. In such scenario the mapping process of step 316 uses the registered remapping of a data post that have been used the most times, i.e., most frequently. This may be achieved by updating the count of each mapping action performed from the mapping rule after finished remapping or, if mapping of the input data set to the capture data set without further remapping, after mapping. Remapping in step 324 that is performed in regard of a presently handled input data set may override any mapping indications in the mapping rule, even if the mapping in the mapping rule is strong, i.e. is registered with a high number of mappings.

The displaying of received data posts 46 in the display view 42 may, according to some embodiments, include identifying data posts of the input data set by reading the respective connected identifier in the received data message as discussed above. In other embodiments the identifier is extracted by interpreting the position of a data post in the received data message as discussed above. The layout template may then include a position in the display view 42 for each display identifier 48. Then the data posts having an identifier corresponding to a display identifier 48 is displayed in the position within the display view 42 assigned to the display identifier 48. The displaying of the data posts 46 in the display view 42 may be implemented by means JavaScript, HTML, or similar mark-up languages, etc. In some embodiments the positioning of the data posts is performed based on the identifiers and corresponding data posts received in the data message, i.e. without mapping the identifiers using the mapping rule. However, in other embodiments the positioning may be performed based on the identifiers and corresponding data posts after the received data message has been mapped using the mapping rule, but without updating the data post at a position in response to a remapping of a data post during the same session of handling the specific input data set.

In the above description it is described that a first subset of data posts from the input data set is displayed in the display view and that a second subset of data posts from the input data set is displayed in the dynamic rearrangement view. The second subset of data posts may be a subset of the first subset of data posts, the first subset of data posts and the second subset of data posts may be identical, or first subset of data posts may be a subset to the second subset of data posts.

Some aspects of the invention relate to a method for adapting received tagged invoice data, i.e. tagged control data, from a supplier to a format and/or a structure that enables and/or facilitates a computerised finance managing system to correctly process and/or operate on the received invoice data from the supplier. Each invoice data post of the received tagged invoice data is related to a tag/identifier. Adaption of the invoice data in this way has the advantage of making it possible to make the financial managing system operate on invoices from suppliers using a variety of third-party invoicing software and processes. It also makes it possible to operate on invoice data that is not tagged or provided with identifiers in accordance with the requirements of the process and/or system of the financial managing system. The received tagged invoice data is processed in the computer-based data adaption processing device 20 in accordance with a predetermined layout template and displayed on the display in the display area of the display view 42 for the purpose of checking and/or adapting the received tagged invoice data to the process of the finance managing system. The layout template being configured to display strings of characters representing the invoice data at positions in the display area provided in the layout template, each position also being connected to a tag on the invoice data, as described earlier in this description. The layout template is further configured to display the invoice data at positions corresponding to positions in a physical invoice, e.g. the layout of a paper invoice, which have a layout and a format familiar to a user. In the display view 42 the invoice data may be displayed together with a short text representing the meaning of the invoice data or without such a short text, alternatively some of the displayed invoice data posts in the same display session are displayed together with the short text while others are not.

The display also displays a dynamic rearrangement view 44 which includes fields for displaying invoice data posts 50 to be passed on to and used in the financial managing process to be controlled by the invoice data. Each field may be provided with the short explanatory text or identifier 52 representing the invoice data represented by the field. Each field 50 is connected to a data post in the capture data set. The capture data set being, in these specific embodiments, a data set including invoice data that is sent to the system for processing and controlling. The fields 50 in the dynamic rearrangement view 44 and consequently corresponding data posts in the capture data set is populated by data posts from the received invoice data posts in accordance with the previously described mapping rule. This mapping may be adequate by itself in some cases, however, in other instances the application of the mapping rule results in a corrupt or at least a problematic capture data set. According to some embodiments of the invention such problems may be avoided by displaying the display view 42 and the dynamic rearrangement view 44 simultaneously on the display and enabling remapping of data posts, i.e. invoice data posts, selected in the display view 42 to fields in the dynamic rearrangement view 44 by selecting a data post 46 in the display view 42 and a field 50 in the dynamic rearrangement view 44. In response to the selection of an invoice data post 46 in the display view 42 and the selection of a data field 50 in the dynamic rearrangement view 44, the invoice data post 46 is remapped to the data field 50 and simultaneously to the selected data post of the dynamic rearrangement view 44, i.e. dynamically updating the dynamic rearrangement view 44. Then the corresponding invoice data of the selected invoice data post 46 in the received invoice data is forwarded to the data post in the capture data set corresponding to the data field 50 in the dynamic rearrangement view 44. In the above-described correction scheme applied to received invoice data the transformation of the invoice data from one format and/or structure to another is facilitated and the quality of such transformation is ensured by the user by the use of the interface function and structure of the present invention. Further, the scheme increases the chances of the invoice data delivered being correctly executed and processed at the financial managing system. Hence, the above-described method and interface of transformation of data received from an external source, e.g. invoice data from a supplier makes it possible to efficiently execute data from various systems and the method and the interface makes it possible for a person not being an expert on both the sending and the receiving system to easily adapt data received for use in the processing system of the computer system. In order to further decrease the risk of an invoice data transfer failing to deliver the invoice data to the correct operation or function, the mapping rule may be updated in response to the remapping of a connection between data posts of the received invoice data and the capture data set.

According to some embodiments, when the user is satisfied with the invoice data posts in the capture data set the user acknowledges the capture data set and the capture data set is passed on for processing in the financial managing system.

In order to further facilitate the understanding of the invention a detailed example of a possible use of the present invention will be described. In this example a data generator 12a-b is a computer preparing invoices for a supplier as previously discussed. The data message sent then includes invoice data as the input data set and each data post being tagged or identified in accordance with a standardised scheme such as PEPPOL BIS or any other known scheme discussed earlier. The data message including the invoice data is received at an invoice managing service 10, 14, of an invoice receiver from the supplier. At the invoice managing service the invoice data is parsed and data posts, a first subset of the invoice data, are displayed in the display view 42 of a user interface 40 of the invoice managing service 10, 14, where the invoice data of the subset is selected and arranged in accordance with a display view template, i.e. layout template, to resemble a traditional paper invoice. The display view template may be customised for the invoice managing service owner, i.e., the receiver of the invoice. In addition, the invoice data is parsed, at the invoice managing service, and mapped to data posts in the dynamic rearrangement view 44. The mapping of the data posts is performed in accordance with the mapping rule discussed above. When the display view 42 and the dynamic rearrangement view 44 have been populated with data from the received invoice data a user may examine the display view 42 and the dynamic rearrangement view 44 in order to check for data posts displayed at an erroneous position or under an erroneous descriptive text. A data post erroneous positioned as described indicates a discrepancy between the interpretation of a tag or identification of a data post between the supplier and the invoice receiver. In order to rectify such discrepancies, the user may select the more correct, according to the user, data post field 50 in the dynamic rearrangement view 44 and then select the erroneous data post 46 in the display view 42, each selectin may be made by clicking on the displayed data post or field or by indicating it in any other suitable way described above. This remapping of an identifier in the received invoice data to a new post is registered in the mapping rule, is updated in the capture data set and the dynamic rearrangement view 44 is updated accordingly. When, no-more erroneous data posts are found by the user the capture data set is passed on to the computer system 14 and an image of the display view is generated, e.g. in the portable document format commonly known as PDF, and also passed on to the computer system 14. The capture data set is then processed in the computer system by a finance managing system for keeping track of transactions and to prepare future instructions to make financial transactions. The image of the display view is stored as a reference document in a database of the invoice management system.

The generation of the data message including data posts wherein each data post is associated with an identifier identifying the data in the post, i.e. the type of data and/or the unique data post, may include generation of control parameters for controlling any process or a machine. For example, the data posts may include control parameters controlling a purchase to pay system as discussed above, wherein the control parameters are data posts relating to invoices which controls the setting up of payment instructions. The system may also be used for other types of control parameters, e.g. control parameters for configuring printers, displays, cameras, manufacturing processes etc.

The methods described may be implemented by computer instructions provided in at least one computer program or computer program module and executed in a processing device such as a computer. The method may also be implemented using hard wired components, application specific circuits (ASIC), field-programmable gate arrays (FPGA), etc. Alternatively, an implementation may include any combination of the above technologies. The computer instruction may be stored on a non-transitory computer-readable medium.

The various embodiments described above are provided by way of illustration only and should not be construed to limit the invention. For example, the principles herein may be applied to any remotely controlled device. Those skilled in the art will readily recognize various modifications and changes that may be made to the present invention without following the example embodiments and applications illustrated and described herein, and without departing from the scope of the present disclosure.

## Claims

1. A method for adapting a data structure of an input data set for processing in a computer system (14), the method comprising:
receiving, in a data adaption processing device (20), the input data set including plurality of data posts,
identifying identifiers (48) in the input data set, each identifier being (48) connected to at least one data post (46) received in the input data set and indicating the sort of data represented by the connected data post (46),
displaying a first subset of the data posts (46) from the input data set in a display view (42), wherein each data post (46) is displayed at a specified position within a display area (42) related to the identifier (48) of the data post (46),
mapping, in the data adaption processing device (20), the received data set identifiers (48) relating to each of a second subset of the data posts (46) to identifiers (52) of data posts (50) in a capture data set,
displaying the second subset of the data posts in a dynamic rearrangement view (44), wherein each data post (50) of the second subset is displayed in a field connected to the identifier (52) related to the data post (50) displayed,
receiving, in the data adaption processing device, a first identifier connected to a data post selected in the display view (42),
receiving, in the data adaption processing device, a second identifier connected to a data post selected in the rearrangement view (44),
remapping, in the data adaption processing device (20), the data post connected to the first identifier to the data post in the capture data set connected to the second identifier, and
sending the remapped capture data set to the computer system (14) for processing based on the connected identifiers.

2. The method according to claim 1, wherein the mapping of identifiers (48) of the received data set to identifiers (52) of the capture data set is specified in a mapping rule.

3. The method according to claim 2, further comprising:
identifying the sender of the received data set from a data post connected to an identifier identifying a post as including data of the sender, and
retrieving a mapping rule configured for the identified sender.

4. The method according to any one of claims 2 to 3, wherein the remapping of the received first identifier to the received second identifier is registered in the mapping rule.

5. The method according to any one of claims 1 to 4, wherein the displaying of the second subset of the data posts from the capture data set is dynamically updated in response to the remapping of identifiers.

6. The method according to any one of claims 1 to 5, further comprising sending an image corresponding to the display view (42) in connection with the sending of the corresponding capture data set.

7. The method according to any one of claims 1-6, wherein the computer system (14) receiving the capture data set parse the identifiers of the capture data set and trigger functions identified by the identifier using the corresponding data post as value for the identified function.

8. The method according to any one of claims 1-7, wherein the display view (42) is arranged to resemble a physical document that traditionally is carrying the corresponding information of at least a subset of the input data set.

9. The method according to any one of claims 1-8, wherein identifying identifiers (48) in the input data set includes reading in the input data set included identifiers which each are connected to a data post (46) in the input data set.

10. The method according to any one of claims 1-9, wherein the interface (40), presenting the display view (42) and the rearrangement view (44), and the data adaption processing device (20) are hosted on the same computer.

11. A data adapting interface configured to perform the method according to any one of claims 1-10.

12. A non-transitory computer-readable medium storing processor-executable instructions that, when executed by a processor, cause the processor to perform the method according to any one of claims 1-10.
